Europäisches Patentamt

European Patent Office

Office européen des brevets

(19)

(11) Veröffentlichungsnummer : **0 132 011**
**B1**

(12) **EUROPÄISCHE PATENTSCHRIFT**

(45) Veröffentlichungstag der Patentschrift :
07.03.90

(21) Anmeldenummer : 84201022.5

(22) Anmeldetag : 11.07.84

(51) Int. Cl.⁵ : **C 03 B 37/025**

(54) Verfahren zur Herstellung von Lichtleitfasern.

(30) Priorität : 16.07.83 DE 3325700

(43) Veröffentlichungstag der Anmeldung :
23.01.85 Patentblatt 85/04

(45) Bekanntmachung des Hinweises auf die Patenterteilung : 07.03.90 Patentblatt 90/10

(84) Benannte Vertragsstaaten :
DE FR GB IT

(56) Entgegenhaltungen :
EP-A- 0 023 066
EP-A- 0 129 291
FR-A- 2 450 239
FR-A- 2 450 240
US-E- 30 635

(73) Patentinhaber : Philips Patentverwaltung GmbH
Wendenstrasse 35 Postfach 10 51 49
D-2000 Hamburg 1 (DE)
DE
N.V. Philips' Gloeilampenfabrieken
Groenewoudseweg 1
NL-5621 BA Eindhoven (NL)
FR GB IT

(72) Erfinder : Geittner, Peter, Dr.
Ronheider Weg 26
D-5100 Aachen (DE)
Erfinder : Lydtin, Hans, Dr.
Am Göpelschacht 9
D-5190 Stolberg (DE)
Erfinder : Wilson, Howard
Königsbergerstrasse 32
D-5100 Aachen (DE)

(74) Vertreter : Piegler, Harald, Dipl.-Chem. et al
Philips Patentverwaltung GmbH Wendenstrasse 35
Postfach 10 51 49
D-2000 Hamburg 1 (DE)

## Beschreibung

Die Erfindung betrifft ein Verfahren zur Herstellung von Lichtleitfasern, bei dem auf der Innenwandung eines auf eine Temperatur zwischen 1 100 und 1 300 °C erwärmten Glasrohres Glasschichten abgeschieden werden, indem ein reaktives Gasgemisch bei einem Druck zwischen 1 und 30 mbar durch das Glasrohr geleitet wird, während im Innern des Glasrohres ein Plasma hubweise hin- und herbewegt wird, wonach das Glasrohr, nachdem eine genügende Anzahl von Glasschichten abgeschieden worden ist, zum Kollabieren gebracht wird, um eine massive Vorform zu bilden, von der Lichtleitfasern gezogen werden.

Unter « Glasrohr » ist in diesem Zusammenhang ein Substratrohr oder Beschichtungsrohr zu verstehen, das entweder aus synthetisch hergestelltem oder aus aus Quarzkristallen durch Schmelzen hergestelltem amorphem Quarz (Schmelzkieselsäure, Quarzglas), der gegebenenfalls dotiert ist, besteht, oder das sowohl aus synthetisch hergestelltem als auch aus aus Quarzkristallen durch Schmelzen hergestelltem amorphem Quarz (Schmelzkieselsäure, Quarzglas), der gegebenenfalls dotiert ist, besteht.

Die Herstellung von Lichtleitfasern bzw. optischen Wellenleitern nach dem zuvor angegebenen Verfahren ist u. a. aus den US-PS Re 30 635 und 43 14 833 bekannt. Diese Herstellungsweise wird in der Praxis als « nichtisothermes plasma-CVD-Verfahren » (nichtisothermes PCVD-Verfahren, wobei P = Plasma und CVD = Chemical Vapour Deposition = reaktive Abscheidung aus der Gasphase) bezeichnet. Bei diesem Verfahren werden aus der Gasphase Glasschichten direkt auf der Innenwandung des Glasrohres abgeschieden (heterogene Reaktion). Hierbei wird die Bildung von Glasruß in der Gasphase vermieden ; dies ist insbesondere in der US-PS 43 14 833 näher beschrieben.

Für die Herstellung optisch hochwertiger Lichtleitfasern durch Innenbeschichtung eines Rohres wird neben dem PCVD-Verfahren das MCVD-Verfahren angewendet.

Der wesentliche Unterschied zwischen dem PCVD-Verfahren und dem MCVD-Verfahren liegt in der Art und Weise, wie die für die Abscheidung der Glaskomponenten notwendigen chemischen Reaktionen angeregt werden. Während das MCVD-Verfahren von thermischen Anregungen ausgeht, nutzt das PCVD-Verfahren Elektronenstoßanregungen aus. Beim MCVD-Verfahren entstehen im wesentlichen primär feine Staubteilchen (Glasruß), deren Abscheidung im Temperatur- und Schwerefeld nur dann gleichmäßig erfolgt, wenn das Rohr rotiert wird. Im Gegensatz hierzu tritt bei der Elektronenstoßanregung des PCVD-Verfahrens die Bildung feiner Staubteilchen nicht ein ; vielmehr liegen die gasförmigen Reaktionsprodukte in molekularer Form vor und können über relativ schnelle Diffusion zur Innenwand des normalerweise benutzten $SiO_2$-Rohres gelangen

und dort auch kondensieren ; eine nachträgliche Sinterung ist hierbei nicht nötig. Das ist auch der Grund dafür, daß beim PCVD-Verfahren in beiden Bewegungsrichtungen des Plasmas Glas abgeschieden werden kann. Im Gegensatz dazu können beim MCVD-Verfahren nur in einer Richtung, und zwar in der Strömungsrichtung der reaktiven Gase, Glasteilchen abgeschieden werden. Es konnte nachgewiesen werden (« Deposition of $SiO_2$ with Low Impurity Content by oxidation of $SiCl_4$ in a non Isothermal Plasma » J. Koenings, D. Küppers, H. Lydtin, H. Wilson, Proceedings of the 5th Int. Conf. on CVD (1975) S. 270-280), daß beim PCVD-Verfahren in gut kontrollierten Laborversuchen eine gleichmäßige Innenwandbelegung eines ruhenden Rohres möglich ist, d. h. der bei atomaren und molekularen Spezies verschwindend geringe Einfluß der Schwerkraft vernachlässigt werden darf. Beim Übertrag der Labordaten auf Pilot- und Produktionsanlagen stellten sich dann aber in den hergestellten Fasern doch bestimmte Klassen von Profilfehlern ein, die insbesondere keine Zylindersymmetrie aufwiesen. Es ist klar, daß die Bandbreitendaten derartiger Fasern weit unter den theoretischen möglichen Werten liegen sollten. Eine Vermeidung dieser Profilfehler nach dem bekannten PCVD-Verfahren mit ruhendem Beschichtungsrohr ist zwar prinzipiell möglich, erfordert aber einen relativ hohen apparativen Aufwand.

So ist z. B. das Abscheidungsverhalten des indexverändernden Dotierungsmaterials und damit die Form des Brechungsindexprofils temperaturabhängig (P. Bachmann, P. Geittner, H. Wilson, Proc. of the 8th ECOC-Conference, Cannes, p. 516 (1982). Damit führen ungleichmäßige Temperaturverteilungen über dem Rohrumfang bei der Abscheidung zwangsläufig zu peripheren Profilfehlern. Eine ungleichmäßige Temperaturverteilung kann u. a. durch Konvektionsströmungen und inhomogene Wärmeableitung über dem Umfang der zur Heizung des Rohres verwendeten Öfen hervorgerufen werden. Um eine gleichmäßige Temperaturverteilung zu erreichen, wäre im allgemeinen ein hoher apparativer Aufwand erforderlich.

Auch die Energieverteilung im Plasma kann in der Praxis — so z. B. über eine nichtzentrische Anordnung des Rohres im Mikrowellenresonator — asymmetrisch sein, was ebenfalls Abscheidungsasymmetrien hervorruft. Ferner tritt beim bekannten PCVD-Verfahren ein kaum merkliches Durchbiegen des Rohres auf, was beim Kollabieren Schwierigkeiten mit sich bringt. Man könnte derartige nichtzentrische Anordnungen und das Durchbiegen zwar verhindern, indem man das Rohr sehr exakt im Resonator positioniert und anschließend bei der gesamten Abscheidung auf Trägern aufliegen läßt. Dadurch würden sich aber sowohl der technische apparative Aufwand, als auch die Temperaturverteilungsprobleme weiter verkomplizieren.

Der Erfindung liegt die Aufgabe zugrunde, die Bildung von peripheren radialen und axialen Profilstörungen in PCVD-Lichtleitfasern in einfacher Weise zu vermeiden.

Diese Aufgabe wird erfindungsgemäß dadurch gelöst, daß bei einem Verfahren der eingangs genannten Art das erwärmte Glasrohr während des Abscheidens der Glasschichten in kontinuierliche Rotation versetzt wird, wobei die Rotationsrichtung bei jeder Umkehrung der Bewegungsrichtung des Plasmas umgekehrt wird, und daß das Glasrohr bei jeder Umkehrung der Rotationsrichtung zuerst um einen Winkel kleiner/gleich 180° um seine Achse gedreht wird, ehe die Rotation und die Bewegung des Plasmas wieder anlaufen, wobei der Winkel so gewählt wird, daß Störungen, die durch eine asymmetrische Energieverteilung im Plasma hervorgerufen werden, kompensiert werden.

Zweckmäßigerweise wird die Rotation mit mindestens 0,25 Umdrehungen pro Hub durchgeführt, weil sich bei kleineren Rotationsgeschwindigkeiten kaum ein thermischer Ausgleich ergeben würde. Die Rotationsgeschwindigkeit ist nach oben hin praktisch nur durch die technische Konzeption der notwendigerweise benötigten vakuumdichten Drehdurchführungen begrenzt.

Der Erfolg der erfindungsgemäßen einzeln oder in Kombination durchgeführten Maßnahmen beruht im wesentlichen darauf, daß periphere Einbaufehler in radialer und axialer Richtung während der Abscheidung aufeinanderfolgender einzelner Lagen in ihrer relativen Position zueinander möglichst vollständig verändert werden, und zwar in der Weise, daß diese sich über der gesamten Abscheidungslänge gleichmäßig gegenseitig kompensieren.

Wie bereits erwähnt, wird beim MCVD-Verfahren rotiert, um die Folgen der Schwerkraft auszuschalten. Demgegenüber würde beim PCVD-Verfahren dieses kontinuierliche Rotieren Schwierigkeiten anderer Art herbeiführen, und zwar würden dabei an gewissen Stellen die Störungen bestehen bleiben.

Durch die erfindungsgemäße Rotation werden auch die störenden Einflüsse ungleichmäßiger Temperaturverteilungen in einfacher Weise beseitigt, da hiermit wegen der thermischen Trägheit des Rohres die Temperatur über dem Rohrumfang gleichmäßig auf einen Mittelwert eingestellt werden kann.

Insgesamt war nicht zu erwarten, daß sich alle diese vielfältigen Probleme durch die relativ einfachen Maßnahmen gemäß der Erfindung beseitigen lassen.

Wie bereits vorher erwähnt, können auch ohne Rotation mit dem PCVD-Verfahren Brechungsindexprofile erzielt werden, die weitgehend frei von peripheren radialen und axialen Störungen sind. Durch das erfindungsgemäße Verfahren werden jedoch Störeffekte höherer Ordnung in einfacher Weise beseitigt, d. h. es werden Verbesserungen in der Feinstruktur der Lichtleitfasern erzielt. Diese Verbesserungen sind insbesondere erstrebenswert, um Bandbreiten über 1 GHz × km zu erreichen.

Die Erfindung wird anhand einer Zeichnung und eines vergleichenden Ausführungsbeispiels näher erläutert.

In der Zeichnung zeigen

Fig. 1 ein nach dem PCVD-Verfahren ohne Rotation hergestelltes optimales parabolisches Brechungsindexprofil und

Fig. 2 ein nach dem erfindungsgemäßen PCVD-Verfahren hergestelltes Brechungsindexprofil.

Dargestellt ist in beiden Fällen die Brechungsindexänderung Δ N über dem Vorformradius R.

Im ersten Teil des Ausführungsbeispiels wurde versucht, nach dem PCVD-Verfahren ohne Rotation ein optimales parabolisches Brechungsindexprofil im Kern einer Vorform herzustellen. Die Materialabscheidung erfolgte dabei unter folgenden Versuchsbedingungen:

Es wurde ein $SiO_2$-Substratrohr mit einem Innendurchmesser von 15,0 mm und einem Außendurchmesser von 18,0 mm verwendet. Die Beschichtungslänge wurde auf etwa 45 cm eingestellt. Der mittlere Druck im Abscheidungsbereich betrug etwa 15 mbar, die Wandtemperatur des Substratrohres etwa 1 150 bis 1 250 °C. Ein Mikrowellenresonator mit 500 W Leistungsaufnahme wurde mit einer Geschwindigkeit von 8 m/min über dem Abscheidungsbereich hin- und herbewegt. Der totale Gasfluß wurde während der gesamten Abscheidungsdauer von etwa 120 Minuten mit 800 sccm (= cm³ Gas pro Minute unter Normalbedingungen: 0 °C, 1 bar) konstant gehalten; die totale Lagenzahl betrug damit 2 100 Lagen bzw. Schichten.

Die Reaktionsgasflüsse $\dot{Q}$ wurden während der Beschichtung wie folgt vorgegeben: Der Sauerstoff-Fluß blieb mit $\dot{Q}_{O2} = 700$ sccm konstant. Im optischen Mantelbereich wurden die $SiCl_4$- und $GeCl_4$-Flüsse mit $\dot{Q}_{SiCl4} = 110$ sccm und $\dot{Q}_{GeCl4} = 0$ sccm konstant gehalten; im Kernbereich wurde $\dot{Q}_{SiCl4}$ von 110 bis 100 sccm und $\dot{Q}_{GeCl4}$ von 0 bis 18 sccm so variiert, daß (bei einem angenähert konstanten Chloridgasfluß von etwa 110 bis 120 sccm) ein parabolisches Brechungsindexprofil erzielt wurde. Die Abscheidungsgeschwindigkeit für das dotierte Kernmaterial betrug unter den vorliegenden Bedingungen etwa 0,30 bis 0,35 g/min.

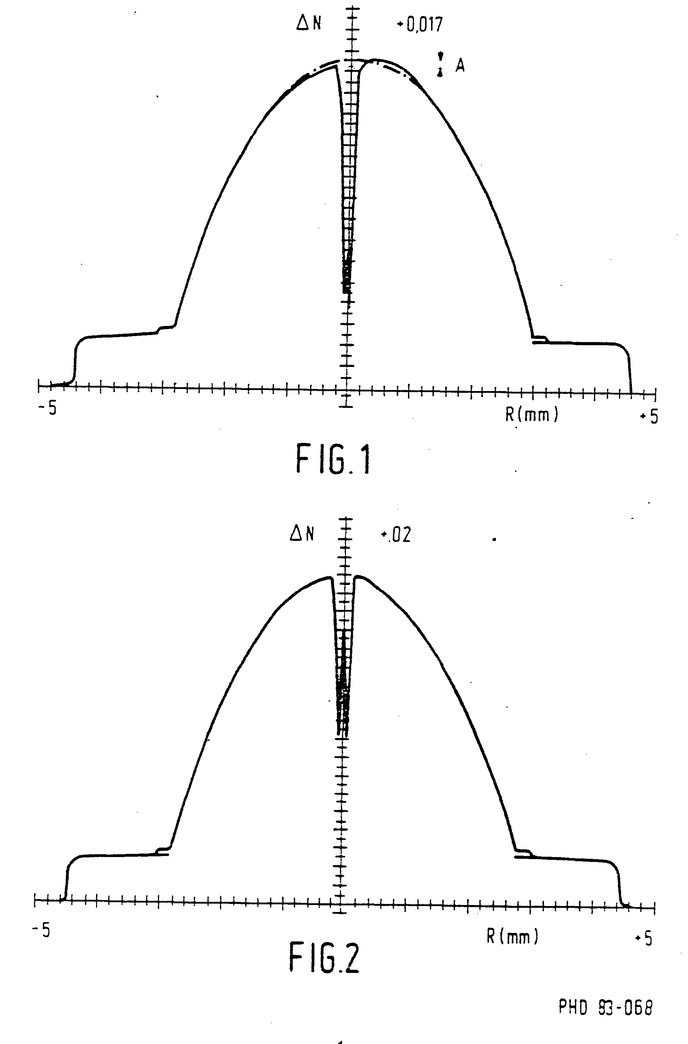

Fig. 1 zeigt das so erzielte Brechungsindexprofil in der kollabierten Vorform (York Technology, P101-Analyzer-Plot, Position 300 mm, 0 Grad; 961 Punkte in 10 μm-Stufen). Wie man deutlich sieht, weist das Profil insbesondere in der Nähe des Zentrums — neben dem zentralen Dip — eine ausgeprägte Asymmetrie A von etwa ± 2 % (bezogen auf den mittleren Brechungsindexunterschied im Zentrum) auf, die der Einstellung hoher Bandbreiten entgegensteht und daher unerwünscht ist. Die Bandbreite der aus der Vorform gezogenen Faser betrug im vorliegenden Ausführungsbeispiel 800 MHz × km (bei einer Übertragungswellenlänge von 900 nm). Zusätzlich wird eine geometrische Asymmetrie festgestellt von etwa ± 1,5 %.

Im zweiten Teil des Ausführungsbeispiels wurde unter den gleichen Abscheidungsbedingungen eine weitere Vorform hergestellt, wobei nun jedoch das Substratrohr während der Abscheidung rotiert wurde. Die Rotation des Rohres wurde mit Hilfe zweier Drehdurchführungen ermöglicht, die weitestgehend gasdicht waren (Leckraten im Bereich von $10^{-4}$ bis $10^{-5}$ mbar $\times 1 \times s^{-1}$) und synchron angetrieben wurden. Beim vorliegenden Ausführungsbeispiel betrug die Rotationsfrequenz von 25 U/min, was bei einer eingestellten Hubfrequenz von 16,6 Hüben/min (Beschichtungslänge 45 cm bei einer Resonatorgeschwindigkeit von 8 m/min) 1,5 Umdrehungen pro Lage entspricht. Die Winkeldrehung an jedem Umkehrpunkt betrug 180°; gleichzeitig wurde an jedem Umkehrpunkt die Rotationsrichtung umgekehrt.

Fig. 2 zeigt das in diesem Fall resultierende, absolut rotationssymmetrische Brechungsindexprofil der Vorform (Meßbedingungen wie bei Fig. 1). Die Bandbreite der aus dieser Vorform gezogenen Faser betrug etwa 1 600 MHz $\times$ km bei 900 nm, war also etwa doppelt so hoch wie im Falle des ersten Teils des Ausführungsbeispiels ohne Rotation bei der Beschichtung. Optische und geometrische Asymmetrien liegen im Bereich von maximal einigen Promille.

**Patentansprüche**

1. Verfahren zur Herstellung von Lichtleitfasern, bei dem auf der Innenwandung eines auf eine Temperatur zwischen 1 100 und 1 300 °C erwärmten Glasrohres Glasschichten abgeschieden werden, indem ein reaktives Gasgemisch bei einem Druck zwischen 1 und 30 mbar durch das Glasrohr geleitet wird, während im Innern des Glasrohrs ein Plasma hubweise hin- und herbewegt wird, wonach das Glasrohr, nachdem eine genügende Anzahl von Glasschichten abgeschieden worden ist, zum Kollabieren gebracht wird, um eine massive Vorform zu bilden, von der Lichtleitfasern gezogen werden, dadurch gekennzeichnet, daß das erwärmte Glasrohr während des Abscheidens der Glasschichten in kontinuierliche Rotation versetzt wird, wobei die Rotationsrichtung bei jeder Umkehrung der Bewegungsrichtung des Plasmas umgekehrt wird, und daß das Glasrohr bei jeder Umkehrung der Rotationsrichtung zuerst um einen Winkel kleiner/gleich 180° um seine Achse gedreht wird, ehe die Rotation und die Bewegung des Plasmas wieder anlaufen, wobei der Winkel so gewählt wird, daß Störungen, die durch eine asymmetrische Energieverteilung im Plasma hervorgerufen werden, kompensiert werden.

2. Verfahren nach Anspruch 1, dadurch gekennzeichnet, daß die Rotation des Glasrohres mit mindestens 0,25 Umdrehungen pro Hub durchgeführt wird.

**Claims**

1. A method of manufacturing optical fibres, in which glass layers are deposited on the inner wall of a glass tube heated at a temperature between 1 100 and 1 300 °C, by passing a reactive gas mixture through the glass tube at a pressure between 1 and 30 mbar, while a plasma is reciprocated strokewise in the interior of the glass tube, after which the glass tube, after a sufficient number of glass layers has been deposited, is collapsed so as to form a solid preform from which optical fibres are drawn, characterized in that the heated glass tube is continuously rotated during the deposition of the glass layers, the direction of rotation being reversed every time the direction of movement of the plasma is reversed, and in that at each reversal of the direction of rotation the glass tube is first rotated through an angle smaller than or equal to 180° around its longitudinal axis before the rotation and the movement of the plasma start again, the angle being selected such that imperfections caused by an asymmetrical energy distribution in the plasma are compensated.

2. A method as claimed in Claim 1, characterized in that the rotation of the glass tube is carried out at at least 0.25 revolutions per stroke.

**Revendications**

1. Procédé pour la fabrication de fibres optiques, selon lequel des couches en verre sont déposées sur la paroi intérieure d'un tube en verre chauffé à une température comprise entre 1 100 et 1 300 °C pendant qu'un mélange de gaz réactif traverse le tube en verre sous une pression comprise entre 1 et 30 mbar, alors que dans le tube en verre, un plasma est animé d'un mouvement alternatif par courses, après quoi, après dépôt d'un nombre suffisant de couches en verre, le tube en verre est porté à affaissement afin de former une préforme massive à partir de laquelle sont étirées des fibres optiques, caractérisé en ce que lors du dépôt des couches en verre, le tube en verre chauffé est déplacé en rotation continue, la direction de rotation étant inversée à chaque inversion du déplacement du plasma et en ce qu'à chaque inversion de la direction de rotation, le tube en verre est d'abord tourné d'un angle inférieur ou égal à 160° autour de son axe avant que la rotation et le déplacement ne recommencent, l'angle étant choisi de façon que les perturbations provoquées par une répartition d'énergie asymétrique dans le plasma soient compensées.

2. Procédé selon la revendication 1, caractérisé en ce que la rotation du tube en verre s'effectue à au moins 0,25 révolution par course.

FIG.1

FIG.2

PHD 83-068